# EUROPEAN PATENT APPLICATION

(11) **EP 4 310 728 A1**
(43) Date of publication of application: **24.01.2024**
(21) Application number: 22185700.6
(22) Date of filing: 19.07.2022
(51) Int. Cl.: G06N 3/045, G06N 3/09, G06N 3/092, G06N 3/0985

(54) **MULTI-EXIT NEURAL NETWORK EXIT STRATEGY**

(71) Applicant: VOLVO TRUCK CORPORATION, 405 08 Göteborg (SE)
(72) Inventor: Brorsson, Erik, 405 08 Göteborg (SE); Poojary, Bharath, 405 08 Göteborg (SE); Harindran, Neethu, 405 08 Göteborg (SE); Ali-Eldin Hassan, Ahmed, 405 08 Göteborg (SE)
(74) Representative: Ström & Gulliksson AB

(57) **Abstract**

The present disclosure presents a method of providing an exit strategy function (200) for a multi-exit neural network (100). The method comprises obtaining a data set (101) for processing by the multi-exit neural network (100) and processing the data set (101) by the multi-exit neural network (100) in order to obtain processed data associated with at least a first exit branch (116) and a second exit branch (126) of the multi-exit neural network (100). The first exit branch (116) is associated with a first processing stage (110) of the multi-exit neural network (100) and the second exit branch (116) is associated with a second processing stage (120) of the multi-exit neural network (100). The method further comprises training the exit strategy function (200) and deploying the trained exit strategy function (200) between the first processing stage (110) and the second processing stage (120).

## Description

### TECHNICAL FIELD

The present disclosure relates to multi-exit neural networks and more specifically, to exit strategies for multi-exit neural networks.

### BACKGROUND

Neural networks have shown state-of-the-art performance within areas as computer vision due to their ability to effectively extract features from e.g. images or video. The accuracy of feature extraction generally increase with a number of layers of the neural network. The expansion of neural networks from a few layers to hundreds of layers has been facilitated by hardware advancements and the development of updated learning algorithms. However, the additional number of layers comes at the cost of increased latency and energy consumption. Energy consumption is generally extremely important due to environmental impacts and for battery powered devices. Latency is equally important when it comes to e.g. real-time resource constrained applications. For instance, image analysis systems for driver assistance or autonomous driving require both low latency and low energy consumption.

One of the strategies used to address this issue is to add multiple exits to a neural network such that it is possible to exit the neural network without having to traverse all layers or computational stages. These configurations are commonly referred to as multi-exit neural networks.

One challenge of multi-exit neural networks is deciding whether to opt for an early exit or process data through the whole neural network. With an incorrect strategy, there is a risk that comparably simple (easy to analyze) data sets may be processed by the whole neural network wasting energy and time. Alternatively, comparably difficult (hard, challenging) to analyze data sets may make an early exit which may harm the quality of the output.

### SUMMARY

It is in view of the above considerations and others that the various embodiments of this disclosure have been made. The present disclosure therefor recognizes the fact that there is a need for alternatives to (e.g. improvement of) the existing art described above.

It is consequently an object of some embodiments described throughout this disclosure to address this. In other words, it would be advantageous to embodiments that solve, mitigate, alleviate, or eliminate at least some of the above or other disadvantages.

An object of the present disclosure is to provide a new type of method for selecting an exit in a multi-exit neural network which is improved over prior art and which eliminates or at least mitigates the drawbacks discussed above. More specifically, an object of the invention is to provide a method for selecting an exit in a multi-exit neural network that is trained based on output data of the multi-exit neural network. These objects are achieved by the technique set forth in the appended independent claims with preferred embodiments defined in the dependent claims related thereto.

In a first aspect, a method of providing an exit strategy function for a multi-exit neural network is presented. The method comprises obtaining of a data set for processing by the multi-exit neural network and processing the data set by the multi-exit neural network thereby obtaining processed data associated with at least a first exit branch and a second exit branch of the multi-exit neural network. The first exit branch is associated with a first processing stage of the multi-exit neural network and the second exit branch is associated with a second processing stage of the multi-exit neural network. The method further comprises training the exit strategy function based on the processed data and ground truth data associated with the data set and deploying the trained exit strategy function between the first processing stage and the second processing stage. In addition to this, the method comprises configuring the multi-exit neural network to proceed to the second processing stage responsive to a decision by the trained exit strategy function.

In one variant, said processed data is comprised in a respective data output. The data output is obtained from processing of the data set. The respective data output further comprises a respective prediction metrics associated with the processing stage associated with the respective exit branch. This is beneficial as the prediction metric (e.g. FFT-based, entropy-based etc.) provides an efficient way to determine an accuracy of the prediction.

In one variant, training the exit strategy function is based on a configurable loss function.

In one variant, training the exit strategy function is further based on a configurable reward function.

In one variant, training the reward function is based on an increased accuracy and a reduced latency of the processing stage of the multi-exit neural network.

In one variant, the exit strategy function comprises a neural network.

In one variant, the exit strategy function comprises a range for the prediction metric.

In one variant, the data set comprises image data.

In one variant, the neural network and/or the exit strategy function is configured for image classification, object detection, pose estimation or semantic segmentation of the data set.

In one variant, the neural network and/or the exit strategy function is configured for semantic segmentation of the data set in the form of instance segmentation.

In a second aspect, a method for selecting an exit branch in a multi-exit neural network is presented. The method comprises obtaining a data set for processing by the multi-exit neural network and processing the data set at a first processing stage associated with a first exit branch of the multi-exit neural network thereby obtaining first stage processed data associated with the first exit. The method further comprises processing the first stage processed data by a Fast Fourier Transform, FFT, thereby obtaining a prediction metric associated with the first data output, and responsive to a decision by an exit strategy function based on the prediction metric, either proceed to a second processing stage of the multi-exit neural network, or exit the multi-exit neural network at the first exit branch.

In one variant, the prediction metric comprises a mean magnitude of the FFT of the first stage processed data. Further to this, a decision to proceed to a second processing stage is taken responsive to the mean magnitude being outside a configurable mean magnitude range, and a decision to exit the multi-exit neural network via the first exit branch is taken responsive to the mean magnitude being within the configurable mean magnitude range.

In one variant, the exit strategy function is provided by the method according to the first aspect.

In a third aspect method for selecting an exit branch in a multi-exit neural network is presented. The method comprises obtaining an exit strategy function according to the method of the first aspect and obtaining a data set for processing by the multi-exit neural network. The method further comprises processing the data set at a first processing stage associated with a first exit branch of the multi-exit neural network thereby obtaining a first stage data output associated with the first exit and responsive to a decision by the exit strategy function based on the first stage data output, either proceed to a second processing stage, or exit the multi-exit neural network via the first exit branch.

In one variant, the processing the first stage processed data comprises a Fast Fourier Transform of the first stage processed data, thereby obtaining a prediction metric associated with the first data output.

In one variant, a decision to proceed to a second processing stage is taken responsive to the mean magnitude being outside a configurable mean magnitude range, and a decision to exit the multi-exit neural network via the first exit branch is taken responsive to the mean magnitude being within the configurable mean magnitude range.

In a fourth aspect, a multi-exit neural network configured to select an exit branch according to the method of the second aspect or the method of the third aspect is present. The multi-exit neural network further configured to provide processed data processed at a processing stage associated with a selected exit branch as output data of the multi-exit neural network.

In a fifth aspect, an image analysis system is presented. The image analysis system comprises a multi-exit neural network of the fourth aspect and a controller configured to cause provisioning of image data to the multi-exit neural network and provide the output data of the multi-exit neural network as analyzed image data of the image analysis system.

In one variant, the controller comprises the multi-exit neural network.

In a sixth aspect a vehicle control system for control of one or more vehicles is presented. The vehicle control system comprises an image analysis system according to the fifth aspect. The vehicle control system further comprises one or more cameras operatively connected to the controller of the image analysis system. The one or more cameras are configured to monitor an environment of one or more vehicles. The vehicle control system is configured to control the one or more vehicles based on the analyzed image data of the image analysis system.

In one variant, at least one of the cameras is a stationary camera.

In one variant, at least one of the cameras is attached to a vehicle controlled by the vehicle control system.

In one variant, the controller of the image analysis system is remote from the one or more vehicles and operatively connected to the one or more vehicles via a wireless interface.

In one variant, the vehicle control system further comprises only one vehicle and wherein the image analysis system is comprised in the only one vehicle.

In a seventh aspect, a vehicle operatively connected to the vehicle control system of the sixth aspect is presented. The vehicle is configured to be controlled by vehicle control system.

In an eighth aspect, a computer program product is presented. The computer program product comprises a non-transitory computer readable medium, having thereon a computer program comprising program instructions. The computer program is loadable into a controller and configured to cause execution of the method according to the first aspect when the computer program is run by the controller.

In a ninth aspect, a computer program product is presented. The computer program product comprises a non-transitory computer readable medium, having thereon a computer program comprising program instructions. The computer program is loadable into a controller and configured to cause execution of the method according to the second aspect when the computer program is run by the controller.

In a tenth aspect, a computer program product is presented. The computer program product comprises a non-transitory computer readable medium, having thereon a computer program comprising program instructions. The computer program is loadable into a controller and configured to cause execution of the method according to the third aspect when the computer program is run by the controller.

Various embodiments of the different aspects described hitherto allows for increased efficiency in processing data in multi-exit neural network. By applying an exit strategy function according to the different aspects described hitherto, it is possible to decrease one or more of processing requirements, processing times, power consumption etc., thereby increasing a responsiveness of a multi-exit neural network.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a schematic view of a multi-exit neural network according to embodiments of the present disclosure;
Fig. 2 is a schematic view of a multi-exit neural network according to embodiments of the present disclosure;
Fig. 3 is a schematic view of a multi-exit neural network according to embodiments of the present disclosure;
Figs. 4a-b are schematic views of data outputs according to embodiments of the present disclosure;
Fig. 5 is a schematic view of an exit strategy function according to embodiments of the present disclosure;
Fig. 6 is a schematic view of an exit strategy function according to embodiments of the present disclosure;
Fig. 7 is a schematic view of a method for selecting an exit branch in a multi-exit neural network according to embodiments of the present disclosure;
Fig. 8 is a schematic view of a method for selecting an exit branch in a multi-exit neural network according to embodiments of the present disclosure;
Fig. 9 is a schematic view of a method for an exit strategy function for a multi-exit neural network according to embodiments of the present disclosure;
Fig. 10 is a schematic view of an image analysis system according to embodiments of the present disclosure;
Fig. 11 is a schematic view of a vehicle control system according to embodiments of the present disclosure;
Figs. 12a-b are schematic views of vehicles according to embodiments of the present disclosure;
Figs. 13a-b are schematic views of a computer program product according to embodiments of the present disclosure;
Figs. 14a-b are schematic views of a computer program product according to embodiments of the present disclosure; and
Figs. 15a-b are schematic views of a computer program product according to embodiments of the present disclosure.

### DETAILED DESCRIPTION

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art. Like reference character refer to like elements throughout the description.

The term "coupled" is defined as connected, although not necessarily directly, and not necessarily mechanically. Two or more items that are "coupled" may be integral with each other. The terms "a" and "an" are defined as one or more unless this disclosure explicitly requires otherwise. The terms "substantially," "approximately," and "about" are defined as largely, but not necessarily wholly what is specified, as understood by a person of ordinary skill in the art. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are openended linking verbs. As a result, a method that "comprises," "has," "includes" or "contains" one or more steps possesses those one or more steps, but is not limited to possessing only those one or more steps.

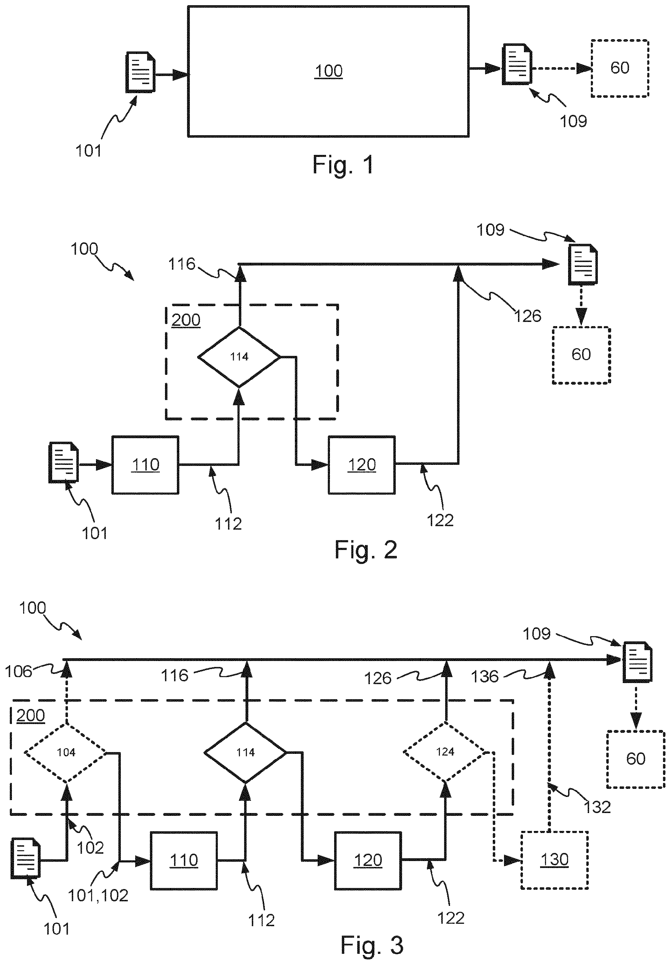

With reference to Fig. 1, a schematic view of a multi-exit neural network 100 is shown. The multi-exit neural network 100 may, throughout the present disclosure, be referred to as an artificial multi-exit neural network 100, a deep multi-exit neural network 100 or, at times, simply multi-exit network 100 without implying further specification or limitation to the multi-exit neural network 100. The multi-exit neural network 100 is configured to obtain (e.g. receive, be provided with) a data set 101 as input data and provide (e.g. output, deliver) output data 109 based on the data set 101. Generally, the output data 109 is different from the data set 101 provided as input data, but may at times men equal to the data set 101 for instance in cases of direct exit (e.g. very early exit) as will be understood from the following. In Fig. 1, the multi-exit neural network 100 is illustrated with only one exit and this is for explanatory purposes to visualize that although the multi-exit neural network 100 have a plurality of exits internally, it is preferably configured to provide one output data 109 that is formed form data obtained at one of the internal exits of the multi-exit neural network 100. The output data 109 may be provided to an optional post-processing stage 60 that will be further explained elsewhere.

When it comes to multi-exit neural networks 100, there are different training approaches adopted for these architectures. One common or straight forward way is to treat it as a joint optimization problem by combining the losses from all the exit points. Another strategy is to train the backbone network (all layers of the neural network) first, followed by training the early exits independently. Once the multi-exit neural network 100 is trained, data sets 101 may make early exits (not process data sets 101 though all layers of the multi-exit neural network 100). The decision to exit the multi-exit neural network 100 early is generally made depending on how confident the multi-exit neural network 100 is in its predictions, i.e. how likely is it that a result at an early layer (e.g. processing stage) will be the same as a result at a final (or later) layer.

For a classification problem, entropy of the classification result is commonly used as a measure of confidence. If the entropy value at an early exit is below a threshold value, the exit is considered to be confident in its predictions and the prediction results (the result of processing of the data set 101 up until the associated exit) are returned without further processing at later layers of the multi-exit neural network 100. If the entropy value at an early exit exceeds the threshold value, the exit is not confident in its predictions and the processing of the data set 101 continues to a subsequent exit. After processing the data set 101 through all layers of the multi-exit neural network 100, the predicted output provided by the last (e.g. final, deepest) layer will generally be provided as output data 109 from the multi-exit neural network 100.

To make correct decisions, a multi-exit neural network is preferably able to assess what performance/accuracy gain that may be expected if a data set 101 is processed further, i.e. by subsequent processing stages (e.g. layers) of the multi-exit neural network 100. In other words, the performance/accuracy gain is preferably estimated at points in the multi-exit neural network 100 when the data set 101 has only been processed by parts of (e.g. a subset of processing stages/layers) the multi-exit neural network 100. As indicated above, one common method (e.g. exit strategy, exit strategy function) for determining which data set 101 require processing by the whole or only parts of the multi-exit neural network 100 is to compute the entropy of the multi-exit neural network's 100 prediction at each exit branch, or at least one non-final exit branch. If the entropy is high, roughly meaning that the multi-exit neural network 100 is uncertain in its prediction, a decision will be made to process the data set 101 further. Correspondingly, if the entropy is low, the multi-exit neural network 100 may be configured to interrupt the execution and make an early exit.

Exit strategies based on the entropy of the predictions at non-final exit branches are configured under the assumption that the entropy has a negative correlation with the accuracy of the predictions, i.e. high entropy generally indicates low accuracy. Therefore, it is generally not preferred to make an early exit if the entropy is high, since a low accuracy is expected in that case. Instead, the decision is then made to process the data set 101 further in hope of achieving a lower entropy and higher accuracy at a later exit. However, this strategy makes no effort in estimating the expected performance gain of processing the data set 101 further. Therefore, in cases where the entropy of the prediction of a data set 101 is high at each exit branch, the multi-exit neural network 100 is likely to refrain from making an early exit; but in the end, the performance of the prediction may be no better than that of the first exit branch. In general, one would only want to process the data set further if a large enough performance gain in relation to the increased computational cost is expected by this. In other words, an expected benefit of further processing is preferably paired with an expected cost (e.g. time, energy consumption, resource occupation etc.) of the further processing.

Further to this, it should be mentioned that multi-exit neural network 100 are generally prone to overfitting to training data and thereby providing overconfident predictions for unseen data in a data set 101. This result in multi-exit neural network 100 (or general neural networks for that matter) providing high-confidence predictions for predictions that are incorrect. In such cases, the above presented assumption that entropy has a negative correlation with accuracy of the prediction is violated, and therefore any exit strategy based solely on entropy would fail.

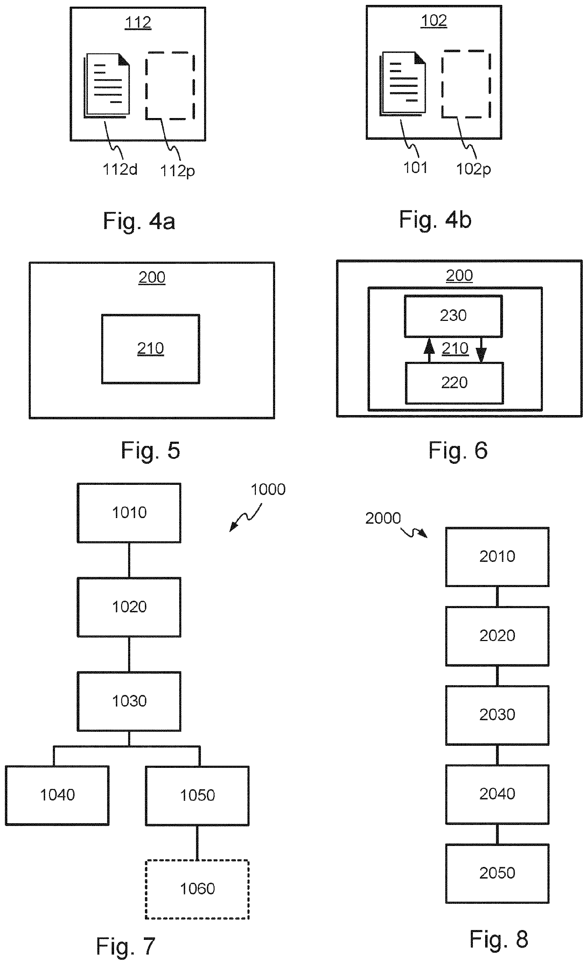

With reference to Fig. 2, further details of the multi-exit neural network 100 will be explained. As previously presented, the multi-exit neural network 100 comprises a plurality of layers or processing stages 110, 120. The embodiment of Fig. 2 comprises a first processing stage 110 and a second processing stage 120. The first processing stage is associated with a first exit branch 116 and the second processing stage is associated with a second exit branch 126. In the present context, associated means that data processed by the first processing stage 110 may be provided as output data 109 of the multi-exit neural network 100 via the first exit branch 116. The data set 101 is provided to a first processing stage 110 which processes the data set 101 and provides first stage processed data 112d (see Fig. 4). The first stage processed data 112d is provided to a trained exit strategy function 200. The details of the training of the trained exit strategy function 200 will be explained elsewhere and for simplicity reasons, the trained exit strategy function 200 may be referred to simply as exit strategy function 200 throughout the present disclosure. The exit strategy function 200 is arranged serially between the first processing stage 110 and a second processing stage 120 of the multi-exit neural network 100. The exit strategy function 200 comprises, primarily for the sake of explanation, a first stage decision module 114 that, based on the first stage processed data 112d, determines if the first stage processed data 112d is accurate enough, i.e. a high enough confidence prediction, or if further processing is desired. If the exit strategy function 200, determines that the first stage processed data 112d is not a prediction of high enough accuracy, the first stage decision module 114 decides to process first stage processed data 112d further, i.e. by the second processing stage 120. The exemplified first stage decision module 114 using accuracy of the first stage processed data 112d is one specific exemplary embodiment used for explanatory purposes. It should be mentioned that, as will be presented elsewhere in the present disclosure, in several embodiments, the exit strategy function 200 is a neural network which makes the specific description of the first stage decision module 114 quite unlikely. A more general description of the first stage decision module 114 (and the exit strategy function 200) is that it, based on the first stage processed data 112d, determines if further processing is required or not.

If the first stage decision module 114 (or the exit strategy function 200) determines that no further processing of the first stage processed data 112d, the first stage processed data 112d may be exit the multi-exit neural network via the first exit branch 116. This means that the output data 109 will comprise the first stage processed data 112d, or in some embodiments, that the output data 109 will be the first stage processed data 112d.

If the first stage decision module 114 (or the exit strategy function 200) determined that further processing is desired, the first stage processed data 112d may be provided to the second processing stage 120 for further processing. The first stage processed data 112d is processed by the second processing stage 120 to provide second stage processed data 122d (see Fig. 4). In the embodiment of Fig. 2, only two exits branches 116, 126 exists which means that the second exit branch 126 is a final exit branch. In other words, if the data set 101 is processed by the second processing stage, the output data 109 will comprise the second stage processed data 122d, or in some embodiments, that the output data 109 will be the second stage processed data 122d. The output data 109 may be provided to an optional post-processing stage 60 that will be further explained elsewhere.

In Fig. 3, one optional embodiment of the multi-exit neural network 100 is shown having more than two exit branches 106, 116, 126, 136. In this embodiment, the multi-exit neural network 100 may comprise an early exit branch 106 that is not associated with any processing stage of the multi-exit neural network 100. The early exit branch may be associated with an early stage decision module 104 configured to determine if any processing of the data set 101 is necessary and/or beneficial. If it is determined that no processing is necessary, the data set 101 may exit the multi-exit neural network 100 via the early exit branch 106 without having being subjected to any processing of the multi-exit neural network 100. Such a configuration may be suitable in situation where the data set 101 e.g. is faulty, contains no information etc. If the data set 101 exits multi-exit neural network 100 my means of the early exit 106, the output data 109 may comprise the data set 101, or in some embodiments, that the output data 109 will be the data set 101, additionally, or alternatively, the output data 109 may comprise (in some embodiments contain) an indicator indicating that no processing has been performed. Such indications may, in some embodiments, be provided by the post-processing stage 60. However, if the early stage decision module 104 (or the exit strategy function 200) determines that processing is desired, the data set 101 is provided to the first processing stage 110 for processing as described above.

Alternatively, or additionally, the multi-exit neural network 100 may comprise a third processing stage 130 configured to process the second stage processed data 122d responsive to the exit strategy function 200 (or a second decision module 124) determining that the second stage processed data 122d requires further processing. The third processing stage is associated with a third exit branch 136 and is configured to process the second stage processed data 122d and thereby providing third stage processed data 132d (see Fig. 4). As no further processing stages are present in this embodiment, the third exit branch 136 is the final exit branch. In other words, if the data set 101 is processed by the third processing stage (after being processed by the first and the second processing stages 110, 120), the output data 109 will comprise the third stage processed data 132d, or in some embodiments, that the output data 109 will be the third stage processed data 132d.

As with the embodiment in Fig. 2, the output data 109 may be provided to an optional post-processing stage 60 that will be further explained elsewhere.

The embodiments described with reference to Figs. 2 and 3 are exemplary embodiments. The skilled person will understand that any number of exit branches and processing stages may be comprised in a multi-exit neural network 100 according to the present disclosure. It should further be mentioned that specifics given for one processing stage 110, 120, 130, are equally applicable to any other processing stage 110, 120, 130 and the same holds for the processed data 112d, 122d, 132d, the decision modules 104, 114, 124 (if present) and any other function or feature that may be duplicated.

The processed data 112d, 122d, 132d provided by the processing stages 110, 120, 130 may be comprised in a data output 112, 122, 132 associated with the respective processing stage 110, 120, 130 and thereby also the respective exit branch 116, 126, 136 associated with the processing stage 110, 120, 130. A first data output 112 may be provided from the first processing stage 110, a second data output 122 may be provided from the second processing stage 120m a third data output 132 may be provided from the third processing stage and so on. The data output 112, 122, 132 differs from the processed data 112d, 122d, 132d in that the data output may comprise more information than the processed data 112d, 122d, 132d. One embodiment of the first data output 112 is shown in Fig. 4a, but corresponding embodiments may be formed in relation to data outputs 112, 122, 132 associated with any processing stage 110, 120, 130. The first data output 112 of Fig. 4a comprises the first stage processed data 112d and an optional first prediction metric 112p associated with the first stage processed data 112d. The (first) prediction metric 112p may be any suitable prediction metric 112p such as the previously mentioned entropy.

In one embodiment, the first prediction metric 112p is based on a Fast Fourier Transform (FFT) of the first stage processed data 112d. Preferably, and/or advantageously, the first prediction metric 112p comprises a mean magnitude of the FFT of the first stage processed data 112d. As mentioned, this is compatible with any of the mentioned data outputs 112, 122, 132.

In Fig. 4b, an early data output 102 is illustrated. The early data output 102 is slightly different from the previously mentioned data outputs 112, 122, 132 in that it comprises the data set 101 and an optional early prediction metric 102p. The early prediction metric is preferably, and/or advantageously, based on an FFT of the data set 101 and, analog to the above, it preferably, and/or advantageously, comprises a mean magnitude of the FFT of the data set 101.

Replacing, or extending, the entropy based prediction metric 101p, 112p with an FFT based prediction metric is very beneficial. This implies that exit criterion may be determined based on a range of the mean magnitude of the FFT. In an example of image analysis (the data set 101 comprise image data), this is particularly beneficial, for instance, if the mean magnitude of the FFT is not in an expected range, it indicates the presence of jitter/incorrectly classified pixels in the processed data 112d, 122d, 132d.

This allows an allowable range of the mean magnitude of the FFT to be determined by an upper FFT threshold and a lower FFT threshold. In one particular embodiment of image analysis, these thresholds may be determined by analyzing the magnitude of FFT on a prediction from training data and by objective calculation through setting a minimum size of the object to be determined in an image coordinate.

With reference to Fig. 5, one embodiment of the exit strategy function 200 according to the present disclosure will be presented. In this embodiment, the exit strategy function 200 comprises a neural network 210. The neural network 210 may be trained in any suitable way, preferably according to the teachings of the present disclosure. The neural network is trained to learn an optimal exit strategy of an associated multi-exit neural network 100. In one embodiment, the neural network is trained based on supervised learning. The training of the neural network 210 is preferably, and/or advantageously, in terms of a user defined loss function. To exemplify the neural network 210 may be trained using predictions (processed data 112, 122, 132 and optionally data set 102) associated with each of the multiple exit branches 106, 116, 126, 136 of an associated multi-exit neural network 100.

An exit strategy function 200 comprising a neural network 210 as exemplified in the embodiment of Fig. 5 may be referred to as an auxiliary model. The exit strategy function 200 comprising a neural network 210 is connected to one or more, preferably, and/or advantageously, all (except the final), exit branches in the associated multi-exit neural network 100. In summary, the trained auxiliary model will be configured to processes the prediction (processed data 112, 122, 132 and optionally data set 102) from each exit branch 106, 116, 126, 136 and make an exit decision based on the training. This increase a probability that the data set 101 will be further processed by the multi-exit neural network 100 only when a performance gain is guaranteed, i.e. a risk of overly processed data is reduced thereby reducing energy consumption, processing power, latency etc.

In Fig. 6, another embodiment of the exit strategy function 200 is illustrated. The exit strategy function 200 of Fig. 6 may also comprise a neural network 210 with the difference compared to the embodiment of Fig. 6 that the neural network 210 is trained based on reinforcement learning (RI) providing a neural network 210 as what is generally known as an RL-model 210. In RI, an agent 230 is configured to make a decision to exit early or process the data set 201further. During training of the RL-model 210, the agent 230 receives a corresponding reward that grows with increasing accuracy and reduced latency. Preferably, and/or advantageously, an environment 220 of the RL-model 210 is configured such that latency and the prediction (processed data 112, 122, 132 and optionally data set 102) associated with an exit branch 106, 116, 126, 136 determines the state of the environment 220. The agent 230 is generally taught to make decisions that maximize the reward function. Consequently, the agent 230, and thereby the RL-model 210 and the exit strategy function will strive to make exit decisions that achieve an as close to as possible optimal trade-off between accuracy and latency according to the defined reward function. The reward function is preferably, and/or advantageously, specified by the user.

With reference to Fig. 7, a method 1000 for selecting an exit branch 106, 116, 126, 136 in a multi-exit neural network 100 will be described. The method 1000 is usable with any suitable features specified in the present disclosure and may comprise obtaining 1010 of the data set 101 according to any embodiment presented herein. The method 1000 is particularly suitable for use with the multi-exit neural networks 100 as presented herein, specifically with reference to Figs. 1 to 3. The data set 101 may be any data set 101 suitable for processing by multi-exit neural networks 100 as disclosed herein. The method 1000 may further comprise processing 1020 of the data set 101 at the first processing stage 110 of the multi-exit neural network 100. As previously specified, the first processing stage is associated with the first exit branch 116 of the multi-exit neural network 100. The processing 1020 will provide the first stage processed data 112d associated with the first exit 116. As previously mentioned, the first stage processed data 112d, may be comprised in the first data output 112. In the embodiment of Fig. 7, the method 1000 further comprises processing 1030 the first stage processed data 112d by an FFT to obtaining a prediction metric 112p. The prediction metric is associated with (comprised in) the first data output 112. The first data output 112 is provided to an exit strategy function that, based on the prediction metric 112p, either proceed 1040 to a the second processing stage 120 of the multi-exit neural network 100, or exit 1050 the multi-exit neural network 100 at the first exit branch 116.

In some embodiment, the method 1000 may comprise providing the early data output 102, i.e. the data set 101 and the early prediction metric 102p to the exit strategy function and only proceed to the first processing stage 110 if the exit strategy function determines that it is beneficial.

As the skilled person will appreciate after digesting the teachings of the present disclosure, the early data output 102 in general, and the early prediction metric 102p based on FFT in particular, may be used also with single exit neural networks. That is to say, the early data output 102 of the present disclosure may be utilized to determine if the data set 101 should be processed by the neural network, i.e. if there is a benefit of processing the data set 101.

It should be noted that the method 1000 of Fig. 7 is fully workable with trained exit strategy functions 200 of the present disclosure but that these are not required. As the prediction metric 112p is based on an FFT of the first stage processed data 112d, the exit strategy function may comprise a simple analysis (comparison, processing) of the FFT of the first stage processed data 112d (or data set 101).

In some embodiments of the method 1000, the prediction metric 112p comprises a mean magnitude of the FFT according to the teachings of the present disclosure. In this embodiment, a decision to proceed 1040 to a consecutive (the second) processing stage 110, 120, 130 may be taken responsive to the mean magnitude being outside a configurable mean magnitude range. Correspondingly, a decision to exit 1050 the multi-exit neural network 100 via the exit branch 106, 116, 126, 136 associated with the processed data 112d, 122d, 132d (data set 101) on which the prediction metric 112p is determined may be taken responsive to the mean magnitude being within the configurable mean magnitude range. The mean magnitude range may be determined based on e.g. heuristic methods, or it may be a trained range having upper and lower limits determined by e.g. training of the exit strategy function 200 of the present disclosure.

In the event that a decision to exit 1050 the multi-exit neural network 100 is taken, the output data 109 may be subjected to post-processing 1060. That is to say, the method 1000 further comprises post-processing 1060 of the output data 109 to provide post-processed data (not shown). The following description of the method step of post processing is applicable also to the optional post-processing stage 60 presented in reference to Figs. 1-3. The output data 109 may, depending on what exit branch 106, 116, 126, 136 is selected, be differently structured. In some embodiments, the post-processing 1060 may differ depending on from which exit branch 106, 116, 126, 136 the output data 109 comes. It should be mentioned that the output data 109 may comprise the input data 101 if e.g. no processing is performed and/or the processed data 112d, 122d, 132d. The output data 109 may comprise meta data of any suitable form which may comprise a reference to which exit branch 106, 116, 126, 136 the output data 109 is provided from. The post-processing 1060 may differ not only based on the depending exit branch 106, 116, 126, 136, but also depend on the type of input data 101, purpose of multi-exit neural network 100, the processed data 112d, 122d, 132d etc.

In one embodiment, the multi-exit neural network 100 is configured for image segmentation. Techniques and processes associated with image segmentation are well known to the skilled person, but as a general overview, the multi-exit neural network 100 may act as a segmentation backbone and be configured to extract basic features from the input data 101, e.g. down sample the input data 101, in this embodiment an input image. These basic features are often a collection of convolutional layers that produce a low-dimensional spatial feature mapping of the input image. The exit branches 106, 116, 126, 136 will emerge from the backbone's intermediary points and the segmentation backbone makes a key contribution to the system's total latency. The output data 109, e.g. the processed data 112d, 122d, 132d, may be post-processed by up sampling it to the resolution of the input image. The post-processing may be customized to generate outputs corresponding to the resolution of the input image.

The embodiment presented in the previous sections is but one exempla of how the post-processing 1060, and also the post-processing stage 60 may be configured. Generally, post-processing is applied to the processed data 112d, 122d, 132d to modify it into a usable format and the skilled person will be well adverse in many different techniques of post-processing the output data 109.

With reference to Fig. 8, a method 2000 of providing an exit strategy function 200 for a multi-exit neural network 100 will be presented. The exit strategy function 200 provided by the method 2000 may be referred to as a trained exit strategy function 200. The exit strategy function 200 provided is compatible with any multi-exit neural network 100 of the present disclosure, and in fact, the provided exit strategy function may very well be used with single-exit neural networks to determine if a data set 101 should be processed by the neural network or not. The method 2000 comprises obtaining 2010 a data set 101 for processing by the multi-exit neural network 100. The data set 101 is processed 2020 by the multi-exit neural network 100. The data set 101 is processed at least by the processing stages 110, 120, 130 of the multi-exit neural network 100 which the provided exit strategy function is 200 targeting. Preferably, and/or advantageously, the data set 101 is processed at least by the first processing stage 110 and the second processing stage 120 in order to obtaining data output 112, 122, 132 associated with at least the first exit branch 116 and the second exit branch 126 of the multi-exit neural network 100. As previously explained, the first exit branch 116 is associated with the first processing stage 110 and the second exit branch 126 is associated with the second processing stage 120 of the multi-exit neural network 100. The method 2000 further comprise training 2030 the exit strategy function 200 based on the data output 112, 122, 132 and ground truth data associated with the data set 101. Ground truth data is a commonly used term within neural networks, artificial intelligence and machine learning. The term generally refers to the actual nature of the problem that is the target of a machine learning model, reflected by the relevant data sets associated with the use case in question. To exemplify, if the data set 101 is an image, and the multi-exit neural network 100 is configured for determining if there is a cat in the image or not, the ground truth data may be a man-made determination of the image indicating if it comprises a cat or not. The trained exit strategy function 200 is preferably deployed 2040 between the processing stages 110, 120, 130 which's output data 112, 122, 132 was used in the training 2030 of the exit strategy function 200. In one embodiment, the trained exit strategy function 200 is deployed 2040 between the first processing stage 110 and the second processing stage 120. The method 2000 may further comprise configuring 2050 of the multi-exit neural network 100 to proceed to a later processing stage responsive to a decision by the trained exit strategy function 200. Specifically, in embodiments with two exit branches 116, 126 in the multi-exit neural network 100, the multi-exit neural network 100 is configured 2050 to proceed from the first processing stage 110 to the second processing stage 120.

As understood by the skilled person, the method 2000 may very well be modified to comprise training of the exit strategy function 200 based on the a single-exit neural network based on the data set 101 and output data provided by the single-exit neural network and deploying the trained exit strategy function 200 to determine if the data set 101 is to be provided for processing by the single-exit neural network or not. The same reasoning applies to multi-exit neural networks 100 where the exit strategy function 200 may be trained on processed data 112, 122, 132 and the data set 101 and deployed such that the data set 101 is processed by the first processing stage 110 based on a decision by the exit strategy function 200.

The method 2000 may, as the skilled person will appreciate, very well be modified to incorporate further specifics of the multi-exit neural network 100 and other features disclosed herein. To exemplify, in some embodiments, the data output 112, 122, 132 may comprises the respective prediction metrics 112p as described elsewhere in the present disclosure. In some embodiments, the training 2030 may be based on a loss function. The loss function may be a configurable loss function. In other embodiments, the training 2030 may be based on a reward function. The reward function may be a configurable reward function. The skilled person would have no problem in undertaking the configuration of a suitable loss functions or reward functions based on his knowledge of machine learning and the details enclosed herein. In further embodiments, the reward function may be based on an increased accuracy and a reduced latency of the processing stage 110, 120, 130 of the multi-exit neural network 100. In embodiments wherein the data output 112, 122, 132 comprises the respective prediction metrics 112p, the exit strategy function 200 may be configured to provide a range for the prediction metric 112p.

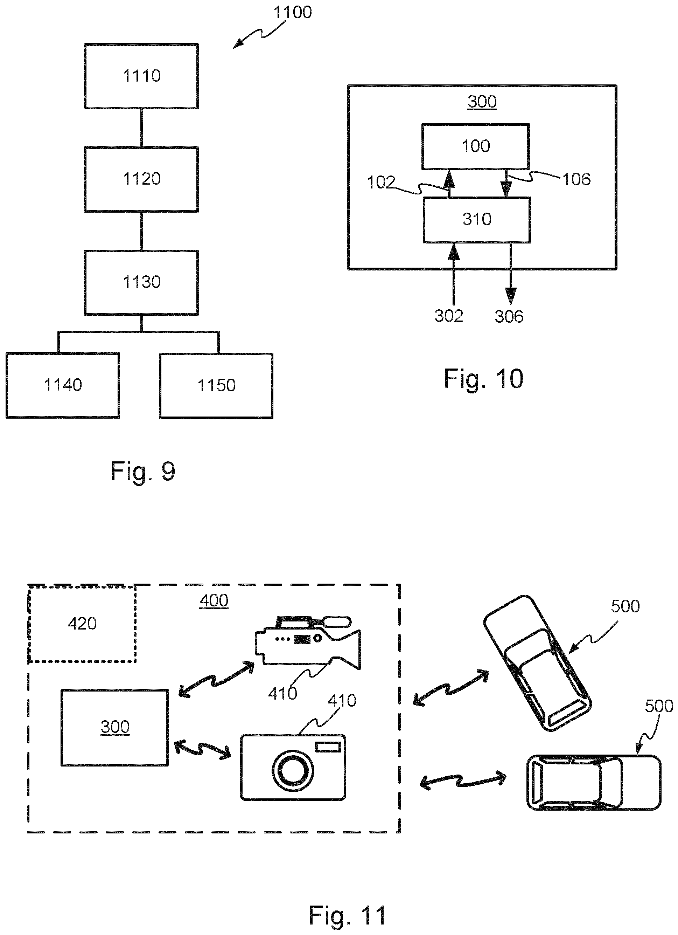

With reference to Fig. 9, and alternative method 1100 for selecting an exit branch 106, 116, 126, 136 in a multi-exit neural network 100 will be presented. The method 1100 is similar to that of Fig. 7 but does not generally comprise a step corresponding to the processing 1030 of the first stage processed data 112d by an FFT to obtain a prediction metric 112p. Although a corresponding step is fully compatible with the method 1100 of Fig. 9, a general embodiment comprise obtaining 1110 of an exit strategy function 200 according to the method 2000 as presented with reference to Fig. 8. Further to this, and analog to the method 1000 of Fig. 7, the method of Fig. 9 comprises obtaining 1120 a data set 101 for processing by the multi-exit neural network (100) and processing 1130 the data set 101 at a first processing stage 110 associated with a first exit branch 116 of the multi-exit neural network 100 in order to obtain the first stage data output 112 associated with the first exit 116. Responsive to a decision by the exit strategy function 200 that is based on the first stage data output 112 the method 1100 either comprises proceeding 1140 to a (next, consecutive) second processing stage 120, or exiting 1150 the multi-exit neural network 100 via the first exit branch 116.

In some embodiment, the method 1100 may comprise providing the data set 101 to the trained exit strategy function 200 and only proceed to the first processing stage 110 if the exit strategy function determines that it is beneficial. This embodiment may be adapted to be usable also with a single-exit neural network and such adaptation is within the knowledge of the skilled person after she has acquired the information disclosed herein.

As mentioned above, also in the method 1100 of Fig. 9 the processing 1130 of the first stage processed data 112d may comprises an FFT of the first stage processed data 112d in order to obtain the prediction metric 112p associated with the first data output 112. The prediction metric 112p may further comprise the mean magnitude of the FFT of the first stage processed data 112d. In such embodiment, the decision to proceed 1140 to the (next, consecutive) second processing stage 120 may be taken responsive to the mean magnitude being outside a configurable mean magnitude range and the decision to exit 1150 the multi-exit neural network 100 via the first exit branch 116 may be taken responsive to the mean magnitude being within the configurable mean magnitude range.

Although the teachings of the present disclosure are applicable in numerous different applications utilizing (multi-exit) neural networks, they are specifically beneficial in image analysis, in particular in real-time image processing. Neural networks are widely used for image processing tasks such as object detection and semantic segmentation in for example applications of Advanced Driver-Assistance Systems (ADAS) and Autonomous Drive (AD). One concern with neural networks is that the most accurate models are usually also the deepest/largest ones, resulting in low inference speed and requiring expensive high-end hardware to have any chance of running in real-time. However, while it is true that very large (deep, heavy weight) neural networks have achieved better performance compared to smaller (more shallow) neural networks on many publicly available datasets, some lightweight (small, shallow) neural network may compete with even the deepest neural networks on large portions of these datasets, while they may be outperformed on only the most difficult examples in the dataset. To save computational resources and energy, the idea to process simple examples (images in this case) with a lightweight model and process the more difficult examples with a deep model then naturally arises. While it may be useful to dynamically switch between a lightweight and heavyweight network in some ADAS and AD applications (for example low latency requirements may be more prominent at high speeds on for example highways, while a more detailed analysis of the image, at the cost of higher latency, may be desired in urban environments where the vehicle travels slowly) as taught in the present disclosure, the teachings of the present disclosure is particularly useful large scale image analysis of multiple (tens or hundreds of) cameras on a shared computational resource (e.g., compute cluster). Such a use case may arise in future production facilities, where the use of cameras and advanced image analysis both for quality control and autonomous robots are expected to increase. Since many of these sensors may be connected to the local network (e.g., WIFI6 or 5G) on-premises, the image analysis can take place on a common (shared) compute cluster. In this setting, the requirements on the computational resource as well as its energy consumption may be reduced significantly if each image doesn't consume more computational resources than necessary. It may be assumed that all cameras connected to the compute cluster may produce difficult-to-analyze images from time to time that require a heavyweight neural networks to perform the image analysis. However, in most cases, it may suffice with a more lightweight neural network. The present disclosure allows for dynamical switching between heavy and lightweight neural networks by confidently determining which image data requires processing by additional processing stages 110, 120, 130. This makes is comparably simple to process the images from each camera, rather than allocating enough computational resources to always use the heavy model for every image, the cost of the compute cluster as well as its energy consumption can be reduced.

Image segmentation is a computer vision task in which each and every pixel in an image is assigned with a label. It differs from image classification where a single label is assigned for an entire picture. Semantic segmentation and instance segmentation are the two types of image segmentation. Semantic segmentation treats multiple objects of the same class as a single entity whereas, instance segmentation treats multiple objects of the same class as distinct individual objects. Prior to the advent of deep learning, image processing techniques such as grey level segmentation, conditional random fields, and others were used to segment an image into separate regions of interest. Today, deep learning methods are considered to be the most effective for semantic segmentation due to the impressive quality of the segmented outputs. The teachings of the present disclosure are equally applicable to semantic segmentation and/or instance segmentation and also for image classification, object detection and/or pose estimation.

In view of the above, with reference to Fig. 10, an image analysis system 300 will be presented. The image analysis system 300 is in Fig. 300 shown to comprises a multi-exit neural network 100 according to the present disclosure, but the skilled person will appreciate, after reading the full disclosure, that also single-exit neural networks are usable with the present disclosure, specifically if they implement an exit strategy function 200 as taught by the method 2000 presented with reference to Fig. 8. The image analysis system 300 further comprise a controller 310. The controller 310 may be referred to as any one of a processor, a controlling unit or a processing unit. The controller 310 is not necessarily one single device, but may be part of (e.g. comprised in), or constituting a distributed system of a plurality of controllers. The controller 310 may be configured to cause provisioning of image data 302 to the multi-exit neural network 100. In some embodiments, the controller is configured to (at least partially) provide image data 302 to the multi-exit neural network 100. The controller 310 may further be configured to cause provisioning of the output data 109 of the multi-exit neural network 100 as analyzed image data 306 of the image analysis system 300. In some embodiments, the controller is configured to (at least partially) provide the output data 109 of the multi-exit neural network 100 as analyzed image data 306 of the image analysis system 300.

It should be mentioned that the multi-exit neural network 100 may be deployed (e.g. implemented) at any suitable processing unit such as a server device, a generic processor, controller etc. In some embodiments, the controller 310 of the image analysis system 300 comprises the multi-exit neural network 100.

As shown in Fig. 11, the image analysis system 300 may be used (e.g. comprised) in a vehicle control system 400. The vehicle control system 400 is configured to control one or more vehicles 500 operatively connected to the vehicle control system 400. The vehicle control system 400 preferably comprise one or more cameras 410. The cameras 410 are operatively connected to (e.g. the controller 310 of) the image analysis system 300 and arranged to monitor an environment (e.g. surrounding area, location) of the one or more vehicles 500 operatively connected to the vehicle control system 400. It should be mentioned that the term environment does not necessarily mean an immediate surrounding area, but may be interpreted as any area the vehicle 500 may (is likely to) occupy. The images from the cameras 410 are obtained by the image analysis system 300 as the image data 302 and the analyzed image data 306 is provided to the vehicle control system 400. The vehicle control system 400 may be configured to control one or more of the vehicles based on the analyzed image data 306. The vehicle control system may comprise a vehicle control controller 420 configured to cause the provisioning of image data 302 between the cameras 410 and the image analysis system 300 and/or the controlling of the vehicles 500. In some embodiments, the vehicle control controller 420 may be comprised in the controller 310 of the image analysis system 300. In some embodiments, the vehicle control controller 420 is forming part of a distributed system of a plurality of controllers. The controller 310 and/or the vehicle control controller 420 may be located remote from the controlled vehicles 500. The operatively connection between the controlled vehicles 500 and the controller 310 and/or the vehicle control controller 420 is preferably provided across an, at least partly, suitable wireless interface, e.g. a cellular interface (e.g. 4G, 5G), a suitable local connectivity interface (e.g. Bluetooth, WLAN, ZigBee) etc.

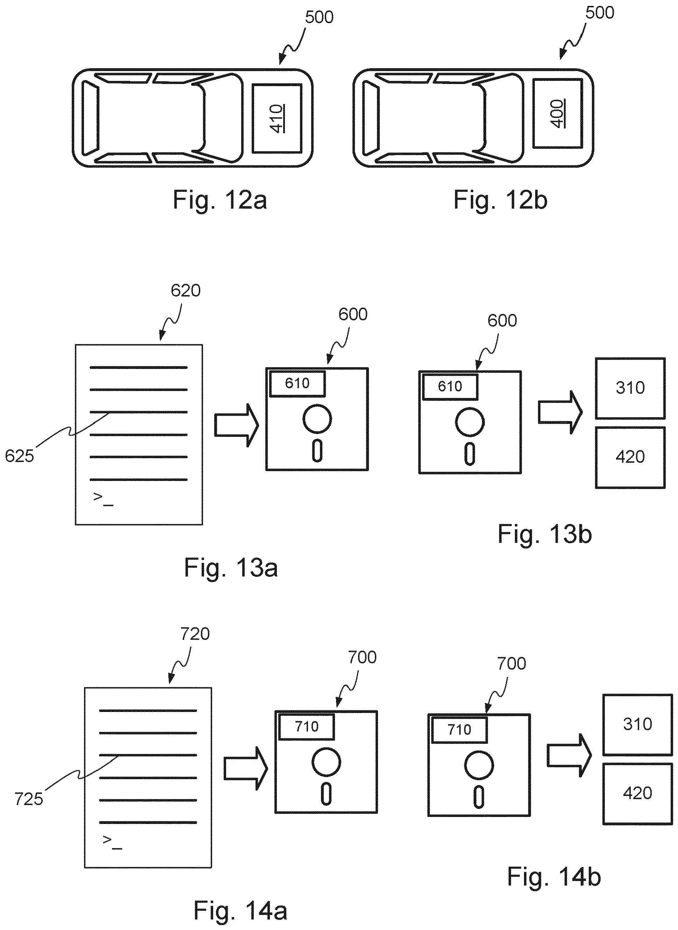

Some of the cameras 410 of the vehicle control system 400 may be stationary cameras 410, this is beneficial in e.g. production/logistic facilities where a number of autonomous vehicles 500 are being controlled. Stationary cameras 410 may be arranged for instance at a ceiling of a facility and monitor vehicles 500 and their surrounding area. Alternatively, or additionally, some of the cameras 410 may be arranged on vehicles 500, see Fig. 12a, controlled by the vehicle control system 400 such that an area immediately surrounding the controlled vehicle may be monitored.

Albeit the vehicle control system 400 is suitable for controlling a plurality of vehicles 500 and analyzing images from a large number of cameras 410, the vehicle control system 400 may be configured to control only one vehicle 500. The vehicle control system 400 of the present disclosure may, in embodiments with only one vehicle 500, beneficially be comprised in that only one vehicle 500, this is illustrated in Fig. 12b. In such embodiments, the vehicle control system 400 may be configured for autonomous control of the vehicle 500, to provide assisted driving to a driver of the vehicle 500 or to act as a warning system and/or support system for the vehicle 500.

With reference to Fig. 13a, a computer program product 600 for providing the exit strategy function 200 according to the present disclosure will be presented. The computer program product 600 preferably comprises a non-transitory (non-volatile) computer readable medium 610, but may additionally, or alternatively, comprise volatile (transitory) computer readable medium. The computer readable medium 610 stores (is provided with, holds) a computer program 620 comprising program instructions 625. The computer program 620 is loadable, see Fig. 13b, into any suitable controller or processer, particularly the controller 310 of the image analysis system 310 and/or the vehicle control controller 420 of the vehicle control system 400. The computer program 620 is configured to cause, when run (executed) by the controller 310, 420, execution of the method 2000 for providing an exit strategy function as presented in the present disclosure and in particular with reference to Fig. 8.

With reference to Fig. 14a, a computer program product 700 for selecting an exit branch 106, 116, 126, 136 in a multi-exit neural network 100 according to the present disclosure will be presented. The computer program product 700 preferably comprises a non-transitory computer readable medium 710, but may additionally, or alternatively, comprise volatile (transitory) computer readable medium. The computer readable medium 710 stores (is provided with, holds) a computer program 720 comprising program instructions 725. The computer program 720 is loadable, see Fig. 14b, into any suitable controller or processer, particularly the controller 310 of the image analysis system 310 and/or the vehicle control controller 420 of the vehicle control system 400. The computer program 720 is configured to cause, when run (executed) by the controller 310, 420, execution of the method 1000 for selecting an exit branch 106, 116, 126, 136 in a multi-exit neural network 100 as presented in the present disclosure and in particular with reference to Fig. 7.

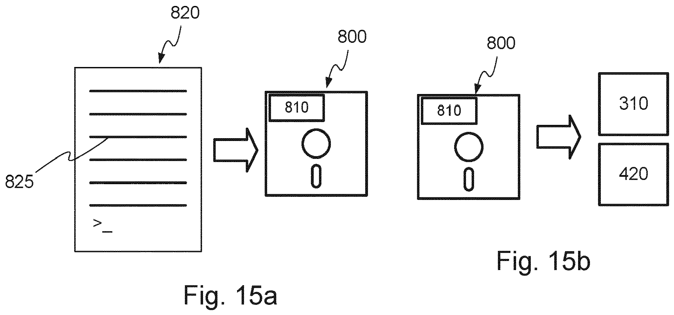

With reference to Fig. 15a, a computer program product 800 for selecting an exit branch 106, 116, 126, 136 in a multi-exit neural network 100 according to the present disclosure will be presented. The computer program product 800 preferably comprises a non-transitory computer readable medium 810, but may additionally, or alternatively, comprise volatile (transitory) computer readable medium. The computer readable medium 810 stores (is provided with, holds) a computer program 820 comprising program instructions 825. The computer program 820 is loadable, see Fig. 15b, into any suitable controller or processer, particularly the controller 310 of the image analysis system 310 and/or the vehicle control controller 420 of the vehicle control system 400. The computer program 820 is configured to cause, when run (executed) by the controller 310, 420, execution of the method 1100 for selecting an exit branch 106, 116, 126, 136 in a multi-exit neural network 100 as presented in the present disclosure and in particular with reference to Fig. 9.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, while embodiments of the invention have been described with reference multi-exit neural networks and image analysis, persons skilled in the art will appreciate that the embodiments of the invention can equivalently be applied to single exit neural networks and/or analysis of generic data. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A method (2000) of providing an exit strategy function (200) for a multi-exit neural network (100), the method (2000) comprising:
obtaining (2010) a data set (101) for processing by the multi-exit neural network (100),
processing (2020) the data set (101) by the multi-exit neural network (100), thereby obtaining processed data (112d, 122d, 132d) associated with at least a first exit branch (116) and a second exit branch (126) of the multi-exit neural network (100), wherein the first exit branch (116) is associated with a first processing stage (110) of the multi-exit neural network (100) and the second exit branch (116) is associated with a second processing stage (120) of the multi-exit neural network (100),
training (2030) the exit strategy function (200) based on the processed data (112d, 122d, 132d) and ground truth data associated with the data set (101),
deploying (2040) the trained exit strategy function (200) between the first processing stage (110) and the second processing stage (120), and configuring the multi-exit neural network (100) to proceed to the second processing stage (110) responsive to a decision by the trained exit strategy function (200).

2. The method (2000) of claim 1, wherein said processed data (112d, 122d, 132d) is comprised in a respective data output (112, 122, 132) obtained from processing (2020) the data set (101), wherein the respective data output (112, 122, 132) further comprises a respective prediction metrics (112p) associated with the processing stage (110, 120, 130) associated with the respective exit branch (116, 126).

3. The method (2000) of claim 1 or 2, wherein training (2030) the exit strategy function (200) is based on a configurable loss function.

4. The method (2000) of claim 1 or 2, wherein training (2030) the exit strategy function (200) is further based on a configurable reward function.

5. The method (2000) of claim 4, wherein training (2030) the reward function is based on an increased accuracy and a reduced latency of the processing stage (110, 120, 130) of the multi-exit neural network (100).

6. The method (2000) of any one of the preceding claims, wherein the exit strategy function (200) comprises a neural network (210).

7. The method (2000) of any one of the preceding claims, wherein the data set (101) comprises image data and the method (2000) is configured for image classification, object detection, pose estimation or semantic segmentation of the data set (101), preferably, the method (2000) is configured for semantic segmentation of the data set (101) in the form of instance segmentation.

8. A method (1100) for selecting an exit branch (116, 126) in a multi-exit neural network (100), the method (1100) comprising:
obtaining (1110) an exit strategy function (200) according to the method (2000) of any one of claims 1 to 10,
obtaining (1120) a data set (101) for processing by the multi-exit neural network (100),
processing (1130) the data set (101) at a first processing stage (110) associated with a first exit branch (116) of the multi-exit neural network (100) thereby obtaining a first stage data output (112) associated with the first exit (116),
responsive to a decision by the exit strategy function (200) based on the first stage data output (112), either proceed (1140) to a second processing stage (120), or exit (1150) the multi-exit neural network (100) via the first exit branch (116).

9. The method (1100) of claim 8, wherein the processing (1130) the first stage processed data (112d) comprises a Fast Fourier Transform of the first stage processed data (112d), thereby obtaining a prediction metric (112p) associated with the first data output (112), and
a decision to proceed (1140) to a second processing stage (120) is taken responsive to the mean magnitude being outside a configurable mean magnitude range, and
a decision to exit (1150) the multi-exit neural network (100) via the first exit branch (116) is taken responsive to the mean magnitude being within the configurable mean magnitude range.

10. A multi-exit neural network (100) configured to select an exit branch (116, 126, 136) according to the method (1100) of claim 8 or 9, wherein the multi-exit neural network (100) is further configured to provide processed data (112d, 122d, 132d) processed at a processing stage (110, 120, 130) associated with a selected exit branch (116, 126, 136) as output data (109) of the multi-exit neural network (100).

11. An image analysis system (300) comprising:
a multi-exit neural network (100) according to claim 11, and
a controller (310) configured to cause provisioning of image data (302) to the multi-exit neural network (100) and provide the output data (109) of the multi-exit neural network (100) as analyzed image data (306) of the image analysis system (300).

12. A vehicle control system (400) for control of one or more vehicles (500), the vehicle control system (400) comprising an image analysis system (300) of claim 11 and one or more cameras (410) operatively connected to the controller (310) of the image analysis system (300) and configured to monitor an environment of one or more vehicles (500), wherein the vehicle control system (400) is configured to control the one or more vehicles (500) based on the analyzed image data (306) of the image analysis system (300).

13. The vehicle control system (400) of claim 12, wherein at least one of the cameras (410) is a stationary camera.

14. A vehicle (500) operatively connected to the vehicle control system (400) of claim 12 or 13 and configured to be controlled by vehicle control system (400).

15. A computer program product (800) comprising a non-transitory computer readable medium (810), having thereon a computer program (820) comprising program instructions (825), the computer program (820) being loadable into a controller (310, 420) and configured to cause execution of the method (1100) according to claim 8 or 9 when the computer program is run by the controller (310, 420).
